# EUROPEAN PATENT SPECIFICATION

(11) **EP 2 523 900 B1**
(45) Date of publication and mention of the grant of the patent: **15.07.2020**
(21) Application number: 10843540.5
(22) Date of filing: 21.12.2010
(51) Int. Cl.: C01B 15/037, D06L 4/12

(54) **HYDROGEN PEROXIDE COMPOSITIONS AND THEIR USES**
WASSERSTOFFPEROXIDZUSAMMENSETZUNGEN UND DESSEN VERWENDUNGEN
COMPOSITIONS DE PEROXYDE D'HYDROGÈNE ET LEURS UTILISATIONS

(30) Priority: 12.01.2010 US 294233 P
(43) Date of publication of application: 21.11.2012
(73) Proprietor: ARKEMA INC., King of Prussia PA 19406 (US)
(72) Inventor: ZHU, Shui-Ping, Berwyn Pennsylvania 19312 (US); CARSON, Stephen W., Coatesville Pennsylvania 19320 (US); GENCO, Keith R., Douglasville Pennsylvania 19518 (US)
(74) Representative: Gorintin, Sarah
(86) International application number: PCT/US2010/061528
(87) International publication number: WO 2011/087786

(56) References cited:
- US-A- 4 534 945
- US-A- 5 736 497
- US-A1- 2002 031 556
- US-A1- 2005 226 800
- US-A1- 2005 226 800
- US-A1- 2006 009 371
- US-A1- 2007 059 380
- US-A1- 2007 087 954
- US-A1- 2007 166 398
- US-A1- 2008 044 343
- US-B1- 6 506 314

## Description

### FIELD OF THE INVENTION

The invention relates to hydrogen peroxide compositions and their uses.

### BACKGROUND OF THE INVENTION

Hydrogen peroxide (H₂O₂) is generally considered an acceptable "green" bleaching agent from a toxicological and environmental standpoint because its decomposition and biodegradation products are oxygen and water. Hydrogen peroxide is used in household laundry bleach, disinfectants, hard surface cleansers, and other cleaning compositions because hydrogen peroxide compositions are usually fiber-safe and color-safe.

Hydrogen peroxide, however, is an unstable chemical compound. Stability may be affected by factors, such as pH, metal ions, and organic compounds added to the hydrogen peroxide. Hydrogen peroxide is relatively unstable when the pH is higher than about 6, but the hydrogen peroxide may be relatively stable at pH values below 4. Decomposition of hydrogen peroxide caused by catalytically active substances, such as metal ions, is extremely difficult to prevent. Many organic compounds also may be oxidized by hydrogen peroxide or decompose the hydrogen peroxide. For products that contain hydrogen peroxide to be effective (e.g., to have an acceptable active oxygen content), a substantial proportion of the hydrogen peroxide must survive between manufacture and use. In addition, decomposition produces oxygen gas, which can pressurize the container it is stored in, which may cause it to rupture during storage or shipping.

Therefore, hydrogen peroxide compositions are typically stabilized to prevent decomposition. For example, the pH may be lowered or a stabilizer may be added to prevent decomposition of the hydrogen peroxide. For example, tin compounds, such as sodium stannate, and phosphorus-based chelating agents have been used as stabilizers for acidic compositions (i.e., those with a pH less than about 5).

An alkaline environment may be desired, however, for cleaning efficiency. The commercial use of alkaline formulations has been hindered by the strong tendency of alkaline hydrogen peroxide compositions to decompose during storage. In addition, under typical storage conditions, decomposition may produce hydroxide ions, which increase the pH and, thus, further increase the decomposition rate. With excessive decomposition of the hydrogen peroxide, the composition loses its cleaning ability. The document US 2005/226800 discloses a hydrogen peroxide composition, but said composition does not includes sulfuric acid or methane sulfonic acid as acidifying agent. While various stabilizers have been developed to improve the stability of aqueous alkaline hydrogen peroxide compositions, there exists a need for hydrogen peroxide compositions and cleaning compositions with increased stability.

### SUMMARY OF THE INVENTION

The present invention provides hydrogen peroxide compositions which exhibit good physical and chemical stability.

According to the present invention, a hydrogen peroxide composition comprises:
hydrogen peroxide;
a stabilizer system comprising 100 to 20 000 ppm of a colloidal stannate;
an acidifying agent or salt thereof selected from the group consisting of methane sulfonic acid or a salt thereof;
phosphonic acid or a salt thereof; and
salicylic acid or a salt thereof,wherein the composition does not comprise a phosphoric acid or a salt thereof,
said hydrogen peroxide composition having a pH in the range of 0.1 to 6.
Preferred embodiments are disclosed in the dependent claims.
The present invention also relate to uses of such a hydrogen peroxide composition, as defined in claims 4 and 9 to 11.

According to an embodiment, the acidifying agent is present in an amount of about 0.5 to 20,000 ppm.

According to an embodiment, the colloidal stannate is selected from the group consisting of sodium stannate, potassium stannate, zinc stannate, stannic oxide, and mixtures thereof.

An embodiment relates to the use of such a hydrogen peroxide composition wherein the composition imparts at least one of physical stability and chemical stability in an alkaline hydrogen peroxide composition.

According to another embodiment of the present invention, a hydrogen peroxide composition further comprises a free radical scavenger.

According to an embodiment, the cleaning formulation further comprises one or more additives selected from the group consisting of surfactants, bleaching agents, enzymes, fluorescent dyes, color dyes, fragrances, thickening agents, inorganic builders, anti-redeposition agents, opacifiers, and mixtures thereof.

According to an embodiment, the cleaning formulation has a pH in the range of about 7-11.

According to an embodiment, the pH adjusting agent is a base selected from the group consisting of alkali metal and alkaline earth metal hydroxides, ammonium hydroxide, substituted ammonium hydroxides, and mixtures thereof.

It is also disclosed; a cleaning formulation comprises hydrogen peroxide, a stabilizer system comprising a colloidal stannate, at least one acidifying agent or a salt thereof selected from the group consisting of sulfur-containing acidifying agents, nitric acid, and mixtures and salts thereof, and a pH adjusting agent.

### DETAILED DESCRIPTION OF THE INVENTION

Aspects of the present invention include hydrogen peroxide compositions, cleaning formulations made therefrom, and methods of making them. Hydrogen peroxide compositions and the cleaning formulations made from the hydrogen peroxide compositions described herein exhibit good stability.

As used herein, "stability," "stabilization," or "stable" is used to connote two properties of the hydrogen peroxide solutions and/or the cleaning compositions: physical stability and chemical stability. "Physical stability" relates to the physical state of a mixture. For example, in a less stable mixture one or more components may precipitate out and/or the composition may appear turbid or hazy. In a more stable composition, however, the composition may appear clear or translucent and the components are well mixed, dissolved, solubilized, dispersed, and/or suspended in solution. Without wishing to be bound to a particular theory, it is believed that physical stability is influenced by the acid selected because many acids were found not to provide good "pH based" stability. Thus, physical stability may be synonymous with acid based stability. On the other hand, it is believed that most acids do provide chemical stability in hydrogen peroxide composition. "Chemical stability" relates to the stability of the hydrogen peroxide (i.e., decomposition of the hydrogen peroxide). Thus, chemical stability may be determined by a percentage of remaining hydrogen peroxide (e.g., active oxygen content) or the presence of decomposition components of hydrogen peroxide (i.e., oxygen and water).

Unless specified otherwise, the values of the constituents or components of the compositions are expressed in weight percent or % by weight of each ingredient in the composition, and parts per million (PPM) are parts per million by weight.

According to an aspect of the present invention, a hydrogen peroxide composition comprises: hydrogen peroxide; a stabilizer comprising 100 to 20 000 ppm of a colloidal stannate; an acidifying agent or salt thereof selected from the group consisting of methane sulfonic acid or a salt thereof; phosphonic acid or a salt thereof; and salicylic acid or a salt thereof,- wherein the composition does not comprise a phosphoric acid or a salt thereof, said hydrogen peroxide composition having a pH in the range of 0.1 to 6.

The hydrogen peroxide may be formed from precursors, such as percarbonates (e.g., sodium percarbonate) under conditions known to those of ordinary skill in the art. The hydrogen peroxide may be added in a neat or dilute form. For example, the hydrogen peroxide may be diluted with water (e.g., distilled, deionized, etc.). The hydrogen peroxide may be present in the hydrogen peroxide composition in amounts ranging from about 0.1 to 99% by weight, preferably about 8 to 99% by weight, more preferably about 20 to 99% by weight, even more preferably about 30 to 70% by weight. In an exemplary embodiment, the hydrogen peroxide composition is concentrated, e.g., there is a high amount of hydrogen peroxide present in the composition, for example, about 50% hydrogen peroxide.

The hydrogen peroxide is stabilized by a stabilizer system, including at least a colloidal stannate. Formulations without stannate, which are not according to the invention, are also disclosed, however, other additives may provide the necessary chemical and physical stability of the hydrogen peroxide.

As used herein, the term "stannate" may be used interchangeably with "stannic" and "stannous" to refer to any compounds that contain tin (Sn). Tin exhibits valencies of 2 and 4. Thus, stannous compounds may refer to tin(II) compounds and stannic compounds may refer to tin (IV) compounds. The stannates may include organic or inorganic compounds. The stannates may include salts, oxides, halogenated compounds, etc., which may be anhydrous or hydrated. Suitable stannates may include, for example, stannic chloride, stannic oxide, stannic bromide, stannic chromate, stannic iodide, stannic sulfide, tin dichloride bis(2,4-pentanedionate), tin phthalocyanine dichloride, tin acetate, tin t-butoxide, di-n-butyl tin(IV) dichloride, tin methacrylate, tin fluoride, tin bromide, stannic phosphide, stannous chloride, stannous fluoride, stannous pyrophosphate, sodium stannate, stannous 2-ethylhexoate, stannous bromide, stannous chromate, stannous fluoride, stannous methanesulfonate, stannous oxalate, stannous oxide, stannous sulfate, stannous sulfide, barium stannate, calcium stannate, copper(II) stannate, lead stannate dihydrate, zinc stannate, sodium stannate, potassium stannate trihydrate, strontium stannate, cobalt(II) stannate dihydrate, sodium trifluorostannate, ammonium hexachlorostannate, lithium hexafluorostannate, and mixtures thereof. In an exemplary embodiment, the stannate is a simple salt, such as sodium stannate. In a preferred embodiment, the stannate is not a stannate complex. In other words, the stannate is not pre-complexed, for example, with a carboxylic acid.

As used herein, "colloid" and "colloidal" are used interchangeably to define particles that may be formed and dissolved, solubilized, well dispersed, or suspended in a mixture. As known to those of ordinary skill in the art, colloidal particles are of a certain average particle size, for example, on the order of about 0.1 microns. The colloidal particles described herein may be of any suitable particle size, which is larger than 0.001 microns. Without wishing to be bound to a particular theory, it is believed that stannates in organic or inorganic compounds act as negatively charged colloidal particles to bind positively charged metal ions. While the stannates may be primarily colloidal in pure water, it is possible that some of the colloidal stannates may be dissolved, solubilized, or finely dispersed, e.g., by surfactants, chelating agents, water soluble polymers etc. in hydrogen peroxide compositions or cleaning formulations. In an exemplary embodiment, the colloidal stannate is selected from the group consisting of sodium stannate, potassium stannate, zinc stannate, stannic oxide, and mixtures thereof.

The amount of stannate may be an important factor for physical stability. When the amount of stannate is low, the selection of acidifying agents is not so critical because there is only a small amount of colloidal particles of the stannates, which can be relatively easily dispersed, solubilized or dissolved and hence have no chance to develop into bigger particle sizes to form precipitation. However, when the amount of stannate is increased, the composition exhibits physical instability (i.e., precipitation of the stannate occurs). Therefore, the selection of the particular acidifying agents described herein allows for higher loadings of stannate in the hydrogen peroxide composition without physical instability.

Optionally, the stabilizer system may further comprise additional stabilizers. For example, the stabilizers may include an aromatic chelating agent or aromatic radical scavenger. It will be recognized by one of skill in the art that, for example, if an acid is added to the composition but the pH is later adjusted to the alkaline range, then the acid may be present in its salt form (e.g., phosphonic acid may include phosphonates, etc.); or if a salt is added to the composition but the pH is later brought down to the acidic range, then the salt may be present in its acid form. So the acids here include their salts and vice versa.

Any suitable phosphonic acid may be used. Phosphonic acids may include, for example, compounds of the general structure N(CR¹R²PO₃H₂)₃, in which R¹ and R² are each independently hydrogen or an alkyl group of one to four carbon atoms, such as amino tri(methylene phosphonic acid) (ATMP) (DEQUEST® 2000, Solutia, St. Louis, Mo., USA), in which R¹ and R² are each hydrogen; diethylene triamine penta(methylene phosphonic acid) (DTPA) (DEQUEST® 2066); hexamethylene diamine tetra(methylene phosphonic acid) (DEQUEST® 2054); bis hexamethylene triamine penta methylene phosphonic acid (DEQUEST® 2090); and compounds of the general structure C(R³)(PO₃H₂)₂OH, in which R³ is hydrogen or an alkyl group of one to four carbon atoms, such as 1-hydroxyethylidene-1,1-diphosphonic acid (HEDP) (DEQUEST® 2010) (C(CH₃)(PO₃H₂)₂OH). Exemplary phosphonic acids include 1-hydroxyethylidene-1,1-diphosphonic acid, amino tri(methylene phosphonic acid), and diethylene triamine penta(methylene phosphonic acid). In a preferred embodiment, the phosphonic acid is an amino-phosphonic acid. The phosphonic acid may also operate as a chelating agent.

Any suitable aromatic chelating agents or aromatic radical scavengers may be used. The aromatic structure may include carbocyclic aromatic rings, such as the benzene or naphthalene ring, as well as heteroaromatic rings such as pyridine and quinoline. The stabilizer may also contain chelating groups, such as hydroxyl, carboxyl, phosphonate, or sulfonate. Any suitable salicylic acid may be used. Salicylic acids may include, for example, a substituted salicylic acid, such as 3-methylsalicylic acid, 4-methyl salicylic acid, 5-methyl salicylic acid, 6-methyl salicylic acid, 3,5-dimethyl salicylic acid, 3-ethyl salicylic acid, 3-iso-propyl salicylic acid, 3-methoxy salicylic acid, 4-methoxy salicylic acid, 5-methyoxy salicylic acid, 6-methoxy salicylic acid, 4-ethoxy salicylic acid, 5-ethyoxy salicylic acid, 2-chloro salicylic acid, 3-chloro salicylic acid, 4-chloro salicylic acid, 5-choloro salicylic acid, 3,5-dichloro salicylic acid, 4-fluoro salicylic acid, 5-fluoro salicylic acid, 6-fluoro salicylic acid; or a mixture thereof. In a preferred embodiment, the salicylic acid is salicylic acid of the formula C₆H₄(OH)COOH. The aromatic chelating agent may be, for example, 8-hydroxy-quinoline; a substituted 8-hydroxy-quinoline, such as, 5-methyl-8-hydroxy-quinoline, 5-methoxy-8-hydroxy-quinoline, 5-chloro-8-hydroxy-quinoline, 5,7-dichloro-8-hydroxy-quinoline, 8-hydroxy-quinoline-5-sulfonic acid, or a mixture thereof. The aromatic chelating agent may be, for example, a pyridine-2-carboxylic acid, such as picolinic acid (2-pyridinecarboxylic aid); dipicolinic acid (2,6-pyridinedicarbxylic acid); 6-hydroxy-picolinic acid; a substituted 6-hydroxy-picolinic acid, such as 3- methyl-6-hydroxy-picolinic acid, 3-methoxy-6-hydroxy-picolinic acid, 3-chloro-6-hydroxy-picolinic acid, S-dichloro-[omicron]-hydroxy-picolinic acid; or a mixture thereof. Preferred aromatic chelating agents include, salicylic acid, 6-hydroxy-picolinic acid, and 8-hydroxy-quinoline.

While the stannate (and other optional stabilizers) provides stabilization of the hydrogen peroxide composition, the stability of the composition may also be affected by the pH. For example, in an acidic cleaning formulation, it has been found to be difficult to obtain a physically stable cleaning formulation. Therefore, while the pH may theoretically be adjusted by any acid, such as carboxylic acids (e.g., citric acid, succinic acid), etc., not all acids were found to provide a stable formulation. In particular, not all acids provided stability at all pH values. The sulfur-containing acids and nitric acid, however, were discovered to provide enhanced stability in hydrogen peroxide formulations of the present invention. Moreover, the stability may also be influenced when the formulation is ultimately elevated to an alkaline pH, for example, when used as a cleaning formulation. For instance, it has been found that inorganic halogenated acids are unsuitable because the halogen ion can be easily oxidized. Phosphoric acid (H₃PO₄) has been used to lower pH and form a relatively stable hydrogen peroxide composition, but phosphoric acid has been generating environmental concern. Accordingly, the cleaning composition is entirely phosphate free. The hydrogen peroxide composition does not comprise a phosphoric acid or salt thereof (e.g., for use as an acidifying agent, chelating agents, water softener, pH buffering agent, or otherwise). Organic carboxylic acids have also been used to lower pH to an acidic range, but when the pH of these acidic formulations is raised to the alkaline range, the stability of hydrogen peroxide becomes poor. In one embodiment, the hydrogen peroxide composition does not comprise organic carboxylic acids or a salt thereof (e.g., for use as an acidifying agent or otherwise). Without wishing to be bound to a particular theory, it is believed that different acids and their low acidic pHs may convert stannate into colloidal particles at different sizes, which may be dissolved, solubilized, well dispensed, or suspended depending on the amount of stannate and acids. Thus, the acid selected may cause the cleaning formulation to be transparent, translucent, hazy, turbid, or even separated, depending on the concentration of stannate and the final pH.

The selection of the one or more particular acidifying agents described herein and/or the combination thereof with the stannate imparts physical stability and chemical stability in the hydrogen peroxide composition. It was discovered that the stabilizers and acidifying agents described herein were compatible and effective in stabilizing the hydrogen peroxide. Thus, both the physical stability of the mixture (e.g., lack of precipitation) and chemical stability of the hydrogen peroxide (e.g., lack of decomposition) may be simultaneously maintained. This physical and chemical stability is achievable even under acidic, neutral, and basic pH ranges. Thus, the hydrogen peroxide composition may be prepared in a pH in the range of 1-12. In an exemplary embodiment, the hydrogen peroxide composition has an acidic pH up to about 6, e.g., in the range of about 0.1-6, more preferably 1-5, even more preferably about 2-4. At a later time, however, the pH may be adjusted to alkaline, for example, when preparing a cleaning composition from the hydrogen peroxide composition. Even at a pH in the range of about 7-11, the hydrogen peroxide composition imparts at least one of physical stability and chemical stability and preferably both in the alkaline composition.

The free radical scavenger may be a chelating agent, such as multiple aminocarboxylic acids, multiple amino-phosphonic acids and their salts. In particular, the free radical scavenger may be an aromatic chelating compound including, for example, salicylic acid; a substituted salicylic acid, such as 3-methylsalicylic acid, 4-methyl salicylic acid, 5-methyl salicylic acid, 6-methyl salicylic acid, 3,5-dimethyl salicylic acid, 3-ethyl salicylic acid, 3-iso-propyl salicylic acid, 3-methoxy salicylic acid, 4-methoxy salicylic acid, 5-methyoxy salicylic acid, 6-methoxy salicylic acid, 4-ethoxy salicylic acid, 5-ethyoxy salicylic acid, 2-chloro salicylic acid, 3-chloro salicylic acid, 4-chloro salicylic acid, 5-choloro salicylic acid, 3,5-dichloro salicylic acid, 4-fluoro salicylic acid, 5-fluoro salicylic acid, 6-fluoro salicylic acid; or a mixture thereof. The aromatic chelating compound may be, for example, 8-hydroxy-quinoline; a substituted 8-hydroxy-quinoline, such as 5-methyl-8-hydroxy-quinoline, 5-methoxy-8-hydroxy-quinoline, 5-chloro-8-hydroxy-quinoline, 5,7-dichloro-8-hydroxy-quinoline, 8-hydroxy-quinoline-5-sulfonic acid, or a mixture thereof. The aromatic chelating compound may be, for example, a pyridine-2-carboxylic acid, such as picolinic acid (2-pyridinecarboxylic acid); dipicolinic acid (2,6-pyridinedicarbxylic acid); 6-hydroxy-picolinic acid; a substituted 6-hydroxy-picolinic acid, such as 3-methyl-6-hydroxy-picolinic acid, 3-methoxy-6-hydroxy-picolinic acid, 3-chloro-6-hydroxy-picolinic acid, 3,5-dichloro-6-hydroxy-picolinic acid; or a mixture thereof. Preferred aromatic chelating compounds may include salicylic acid, 6-hydroxy-picolinic acid, and 8-hydroxy-quinoline. In one embodiment, a single free radical scavenger functions as both a free radical inhibitor and a chelating agent.

The hydrogen peroxide composition may be used for any suitable purpose. For example, the hydrogen peroxide composition may be used in the paper and pulp industry as a bleaching agent, environmental industry, cosmetic industry, electronic cleaning, textile bleaching, chemical processing, food disinfectant, and/or cleaning industries as both a disinfectant and bleaching agent. The particular use of the hydrogen peroxide composition is not especially limited.

In one embodiment, the hydrogen peroxide is used in a cleaning composition. Cleaning compositions are typically raised to the alkaline range to target better stain removal on high pH sensitive stains, such as grape juice, red wine, etc. As used herein, the cleaning composition encompasses any composition that may be used for cleaning, such as industrial and household cleaning, bleaching, and/or disinfectant solutions. Because aqueous hydrogen peroxide compositions are typically acidic, it is necessary to adjust the pH, e.g., by adding a base, such as aqueous sodium hydroxide or aqueous potassium hydroxide, to the composition until the desired pH is attained. The base should be free from metal ions that would catalyze decomposition of hydrogen peroxide, such as ferrous ions, ferric ions, cupric ions, cuprous ions, manganous ions, and similar transition metal ions. The base should also be free from both organic and inorganic materials that would react with the hydrogen peroxide.

The use, as cleaning formulation, of a formulation comprising the hydrogen peroxide composition and a pH adjusting agent is also disclosed.

The pH adjusting agent may be any compound that can affect the pH of the composition, such as acids and bases. In a preferred embodiment, the pH adjusting agent is a base selected from the group consisting of alkali metal and alkaline earth metal hydroxides, ammonium hydroxide, substituted ammonium hydroxides (such as primary, secondary, tertiary, or quaternary ammonium hydroxides), and mixtures thereof. In a preferred embodiment, the base is an aqueous sodium hydroxide. The cleaning formulation may have a pH in the range of about 1-12. Preferably, the pH is adjusted such that the cleaning formulation has a pH in the range of about 7-11. The cleaning formulation may optionally include other ingredients typical in cleaning compositions. For example, the cleaning formulation may comprise one or more additives selected from the group consisting of surfactants, bleaching agents, enzymes, fluorescent dyes, color dyes, fragrances, thickening agents, inorganic builders, anti-redeposition agents, opacifiers, and mixtures thereof.

The cleaning composition may comprise a surfactant or a mixture of surfactants. Numerous surfactants useful in cleaning compositions are well known to those skilled in the art. The surfactant may be anionic, cationic, nonionic, amphoteric, or a mixture thereof. Examples of anionic surfactants include sulfates and sulfates of ethoxylates, sodium cetyl sulfate, sodium lauryl sulfate, sodium myristyl sulfate, sodium stearyl sulfate, sodium dodecylbenzene sulfonate, and sodium polyoxyethylene lauryl ether sulfate. Examples of cationic surfactants may include didecyl dimethyl ammonium chloride, octyl decyl dimethyl ammonium chloride, dioctyl dimethyl ammonium chloride, alkyl dimethyl benzyl ammonium chloride, and mixtures thereof. Nonionic surfactants may include, for example, ethoxylated and propoxylated alcohols, especially C₁₀₋₂₀ alcohols, with 2 to 100 moles of ethylene oxide and/or propylene oxide per mole of alcohol, especially ethoxylates of primary alcohols containing about 8 to 18 carbon atoms in a straight or branched chain configuration with about 5 to 30 moles of ethylene oxide; condensation of aliphatic alcohols containing about 8 to abut 20 carbon atoms with ethylene oxide and propylene oxide; polyethylene glycol and polyethylene oxide; ethoxylated castor oil; ethoxylated hydrogenated castor oil; ethoxylated coconut oil; ethoxylated lanolin; ethoxylated tall oil; ethoxylated tallow alcohol; and ethoxylates of sorbitan esters. Suitable amphoteric surfactants may include, for example, amidobetaines, amidosulfobetaines, coco dimethyl carboxymethyl betaine, cocoamidopropyl betaine, cocobetaine, lauryl amidopropyl betaine, oleyl betaine, lauryl dimethyl carboxymethyl betaine, lauryl dimethyl alphacarboxyethyl betaine, cetyl dimethyl carboxymethyl betaine, lauryl bis-(2-hydroxyethyl)carboxymethyl betaine, stearyl bis-(2-hydroxypropyl)carboxymethyl betaine, oleyl dimethyl gamma-carboxypropyl betaine, and lauryl bis-(2-hydroxypropyl)alpha-carbox-yethyl betaine, coco dimethyl sulfopropyl betaine, stearyl dimethyl sulfopropyl betaine, lauryl dimethyl sulfoethyl betaine, lauryl bis-(2-hydroxyethyl)sulfopropyl betaine. The concentration of surfactant may be from about 0.001 wt.% for direct use to about 70 wt.% for diluted use, more specifically from about 0.1 wt % for direct use to about 50 wt.% for diluted use, of the cleaning composition.

The cleaning composition may comprise a thickening agent that is stable to oxidation under alkaline conditions, helps to control dispensing of the composition, and retards drainage from surfaces to which it is applied. Thickening agents may be organic or inorganic. Inorganic thickening agents may include alkali metal silicates and very high surface area inorganic materials, such as finely divided silica or clays. Organic thickening agents may include cellulose ethers, such as methylcellulose; acrylic and methacrylic polymers and copolymers, such as copolymers of acrylic acid; and biopolymers, such as alginate. Polymer-based products, such as polyacrylic acid copolymers, may be preferred. The concentration of the thickening agent, the nature of the thickening agent, and the nature and concentration of other materials present in the composition may influence the desired viscosity. The thickening agent may be present in an amount of about 0.25 wt. % to about 3.0 wt. % of the cleaning composition.

Other conventional ingredients may also be included, provided each ingredient is compatible with the other ingredients of the hydrogen peroxide composition and the presence of the ingredient does not adversely affect the properties of the cleaning composition. Each additional ingredient may be used to modify the cleaning composition in a conventional way and may be present in an effective amount, that is, in the amount required to achieve the desired effect without adversely affecting the properties of the composition. The cleaning composition may include other bleaching agents, such as hydrogen peroxide releasing agents or hypochlorites. Cleaning compositions may comprise perfumes and fragrances, typically at about 0.03 wt % to about 1.0 wt % of the composition. Fluorescent whitening agents may also be present, typically at about 0.1 wt % to 1.0 wt %. An anti-redeposition agent, such as, polyvinyl pyrrolidone, hydroxyethyl cellulose, sodium carboxymethyl cellulose, and hydroxypropyl ethyl cellulose may be present. An electrolyte, such as sodium sulfate or sodium chloride, may be present. Other conventional ingredients include: dyes and other colorants; fabric softening compositions; static control agents; optical opacifiers, such as polystyrene particles; and suds regulants, such as dimethylpolysiloxane.

Small amounts of organic solvents may also be added to the cleaning compositions provided that they are substantially non-reactive with the hydrogen peroxide. Water-miscible organic solvents, such as alcohols, glycol ethers, and glycols, may be especially suitable.

After all of the other ingredients have been accounted for, water may comprise the balance of the stabilized cleaning composition. Depending on the application, it is often necessary to dilute the hydrogen peroxide with water to obtain the desired hydrogen peroxide concentration. The water should be free from metal ions that would catalyze decomposition of hydrogen peroxide, such as ferrous ions, ferric ions, cupric ions, cuprous ions, manganous ions, and similar transition metal ions. The water should also be free from organic material that would be oxidized by hydrogen peroxide. The water should also be free of inorganic materials that would react with hydrogen peroxide, such as chlorine (Cl₂), hypochlorous acid (HOCl), and sodium hypochlorite (NaOCl). Distilled or deionized water is preferred. In an exemplary embodiment, the cleaning composition is diluted with water such that the cleaning composition comprises about 0.1 to 8% by weight hydrogen peroxide.

The hydrogen peroxide composition may also have a free radical scavenger mixed therein. The manner of adding any supplementary ingredients to the hydrogen peroxide composition is not particularly limited.

Optionally, the pH of the hydrogen peroxide composition may be adjusted to achieve an alkaline pH, e.g., for use in a cleaning formulation. The pH may be adjusted while making the hydrogen peroxide composition or after. As discussed above, the pH may be adjusted using any suitable pH adjuster. For example, the pH may be adjusted using a base, such as sodium hydroxide. As will be apparent to those skilled in the art, if aqueous base is added after preparing the hydrogen peroxide composition, the aqueous base will dilute the stabilized hydrogen peroxide solution.

Before, during, or after the pH is adjusted, one or more additives for use in the cleaning composition may also be added and mixed into the composition. As discussed above, at least one additive may be selected from the group consisting of surfactants, bleaching agents, enzymes, fluorescent dyes, color dyes, fragrances, thickening agents, inorganic builders, anti-redepostion agent, opacifier, foam controller and mixtures thereof.

The hydrogen peroxide and cleaning compositions described herein have been found to provide good chemical stability and physical stability in both acidic and basic pH ranges.

### EXAMPLES

### Example 1: Assessment of Physical Stability

Physical stability was compared for three different acidifying agents: comparative phosphoric acid (H₃PO₄), sulfuric acid (H₂SO₄) according to one embodiment of the invention, and methane sulfonic acid (CH₃SO₃H) according to another embodiment of the invention. Each of the examples included 50 wt. % H₂O₂, 3000 ppm neutral amino-phosphonate, 1500 ppm sodium salicylate, and stannate in amounts as indicated in the tables. The pH was adjusted as denoted in the tables using each of the three acidifying agents, respectively. Physical stability was assessed based on the state and appearance of the mixture. If the stannate precipitated (P) out of solution or the mixture appeared turbid (D), the physical stability would be deemed poor. If the mixture was hazy (H), the physical stability was neutral. If the hydrogen peroxide composition was clear (C) or translucent (T), the physical stability was good. Hydrogen peroxide compositions were prepared comprising hydrogen peroxide, a stannate, and an acidifying agent as indicated below.

As a comparative example, Table 1 shows different concentrations of stannate at different pH values using phosphoric acid as an acidifying agent.

**Table 1 (Comparative - Phosphoric Acid)**

| Concentration of Stannate | pH 2 | pH 2.5 | pH 3 | pH 4 | pH 7 | pH 8 |
|---|---|---|---|---|---|---|
| 100 ppm | C | C | C | C | C | C |
| 1000 ppm | C | C | C | C | C | C |
| 6000 ppm | C | C | C | C | C | C |
| 10000 ppm | C | C | C | C | C | C |

Table 1 shows that phosphoric acid is an effective acidifying. As previously discussed, however, phosphoric acid presents environmental concerns and new acidifying agents were investigated in the present invention.

Table 2 shows different concentrations of stannate at different pH values using sulfuric acid as an acidifying agent.

**Table 2 (Comparative - Sulfuric Acid)**

| Concentration of Stannate | pH 2 | pH 2.5 | pH 3 | pH 4 | pH 7 | pH 8 |
|---|---|---|---|---|---|---|
| 100 ppm | C | C | C | C | C | C |
| 1000 ppm | C | C | C | C | C | C |
| 6000 ppm | D | T | T | C | C | C |
| 10000 ppm | P | P | T | C | C | C |

Table 2 shows that at an alkaline pH of 8 using sulfuric acid as the acidifying agent, the hydrogen peroxide composition was able to have high loadings of stannate and good physical stability. Also, the composition had good physical stability at a pH of 2.5 and a loading of 6000 ppm of stannate.

Table 3 shows different concentrations of stannate at different pH values using methane sulfonic acid as an acidifying agent.

**Table 3 (Methane Sulfonic Acid)**

| Concentration of Stannate | pH 2 | pH 2.5 | pH 3 | pH 4 | pH 7 | pH 8 |
|---|---|---|---|---|---|---|
| 100 ppm | C | C | C | C | C | C |
| 1000 ppm | C | C | C | C | C | C |
| 6000 ppm | C | C | C | C | C | C |
| 10000 ppm | P | P | T | C | C | C |

Table 3 shows that at an alkaline pH of 8 using methane sulfonic acid as the acidifying agent, the hydrogen peroxide composition was able to have high loadings of stannate and good physical stability. Also, the composition had good physical stability at a pH of 2.5 and a loading of 6000 ppm of stannate.

### Example 2: Assessment of Chemical Stability

Table 4 shows a comparison of hydrogen peroxide loss in pure water as a base and in a cleaning base according to one embodiment of the invention and a comparative commercial grade of hydrogen peroxide. A hydrogen peroxide composition was prepared comprising 50% hydrogen peroxide; 0.95 total wt.% of sodium stannate (3 hydrate) and neutral amino-phosphonate and sodium salicylate; and 5600 ppm methane sulfonic acid as the acidifying agent. A comparative hydrogen peroxide composition was ALBONE® 50M obtainable from Arkema Inc. in Philadelphia, PA with pure water and a cleaning base, respectively. The cleaning base consisted of 1% linear alkyl benezenesulfonate; 1% fatty alcohol ethoxylate; 2.5% citrate; and 0.1% fluorescent dye.

Each of the pure water base and the cleaning base formulations contains 4.2% hydrogen peroxide from the hydrogen peroxide composition according to an embodiment of the invention and the commercially available hydrogen peroxide composition ALBONE 50M, respectively. The pH for each was adjusted with sodium hydroxide to a pH of 10. The percentage hydrogen peroxide loss was determined after 7 days at 49°C (120°F).

**Table 4 (Chemical Stability - H₂O₂ loss)**

| Base | H₂O₂ Source | H₂O₂ loss after 7 days |
|---|---|---|
| Pure water | ALBONE® 50M | 100% |
| | H₂O₂ composition according to the invention | 13% |
| Cleaning Base | ALBONE® 50M | 100% |
| | H₂O₂ composition according to the invention | 23% |

Table 4 shows that 100% of the hydrogen peroxide was lost in the comparative hydrogen peroxide composition of ALBONE 50M in both pure water base and the cleaning base. The hydrogen peroxide and cleaning compositions according to an embodiment of the invention, however, had significantly less hydrogen peroxide loss. In other words, the hydrogen peroxide and cleaning compositions according to an embodiment of the invention were significantly more chemically stable than a standard commercial grade of hydrogen peroxide whose ingredients were outside the scope of the present invention.

Table 5 shows a concentrated hydrogen peroxide composition according to an embodiment of the invention with 50% hydrogen peroxide, 0.95% stabilizers of stannate, amino-phosphonic acid, and salicylic acid, and 5600 ppm (0.56 wt. %) of an acidifying agent of methane sulfonic acid (MSA). The pH was 2.91.

**Table 5 (Chemical Stability - Concentrated H₂O₂ formulation)**

| H₂O₂ formulation | percentage |
|---|---|
| Hydrogen peroxide | 50% |
| Stabilizers of stannate, amino-phosphonic acid, and salicylic acid | 0.95% |
| Methane sulfonic acid | 5600 ppm (0.56%) |
| H₂O₂ relative loss, equivalent to 1 year at room temperature | 1.34% |
| H₂O₂ absolute loss, equivalent to 1 year at room temperature | 0.67% |

Table 5 shows the relative loss of hydrogen peroxide equivalent to one year at room temperature was only 1.34% and the absolute loss was only 0.67% for a formulation in accordance with the present invention. This shows the enhanced chemical stability of the concentrated hydrogen peroxide composition according to one embodiment of the invention.

### Example 3: Assessment of Chemical Stability

In Table 6 Example A shows when sodium stannate is added to H₂O₂ composition (commercial grade of PEROXAL® 50 EG with pH around 1.5 available from Arkema Inc.), the pH will go up to about 6.2 and H₂O₂ loss is 10.00% at 85°C after 24 hours (equivalent to about 1 year loss at room temperature). Example B shows that when an acid, here methane sulfonic acid, is added, the pH can be brought down from 6.2 to 2.9, and the H₂O₂ loss is only about 1.11%. The H₂O₂ composition was prepared by: (1)adding 97.09 gram of 51.5% active of Peroxal 50EG to a glass beaker, with agitation and slowly adding 0.63 grams sodium stannate 3 hydrate particles into the solution; (2) slowly adding 0.15 grams sodium salicylate when the stannate was completely dissolved; (3) slowly adding 1.2 gram Dequest 2066 with 25% active of Sodium DiethyleneTriaminePentaMethlyenePhosphonate when the sodium salicylate was completely dissolved; (4) thereafter slowly add methansulfonic acid with 70% active until the pH reaches the target.

**Table 6 H₂O₂ Composition and Stability**

| Ingredient | H₂O₂ | Na₂SnO₃·H₂O | Methane Sulfonic Acid | H₂O₂ | pH | H₂O₂ loss after 24 hours at 85° C |
|---|---|---|---|---|---|---|
| Example A | 50% | 0.60% | - | To 100% | 6.2 | 10.00% |
| Example B | 50% | 0.60% | 0.33% | To 100% | 2.9 | 1.11% |

In Table 7, Examples C, D and E show that when a hydrogen peroxide composition is used in an alkaline cleaning formulation, stabilization of H₂O₂ is no longer provided by an acid. To the cleaning formulations, at a pH of 9.0, hydrogen peroxide compositions were added which contain no acid (Example C), 0.49% citric acid (Example D) and 0.58% methanesulfonic acid (Example E). H₂O₂ loss were 23.9%, 25.1% and 26.6% respectively. The acids, after being neutralized did not provide stabilization to the H₂O₂. The alkaline cleaning formulation was prepared by: (1) adding 0.84 grams of alkylbenzene sulfonic acid to 50 grams DI water at 50°C; (2) adding 0.80 grams of alcohol ethoxylate 7-EO; (3) adding 20 grams of the hydrogen peroxide compositions prepared as described above; (3) adding 26 grams of DI water; (4) adding about 0.37 grams of sodium hydroxide to adjust the pH to 9.0; and (5) adding the balance water of about 2.0 grams.

**Table 7 Alkaline Cleaning Formulations and H₂O₂ Stability**

| | Example C | Example D | Example E |
|---|---|---|---|
| Water | 50.00% | 50.00% | 50.00% |
| Linear Alkylbenzene Sulfonic Acid | 0.80% | 0.80% | 0.80% |
| Alcohol Ethoxylate-7EO | 0.80% | 0.80% | 0.80% |
| Hydrogen Peroxide Composition | 20% | 20% | 20% |
| | | | |

| Hydrogen Peroxide Composition Formulation | | | |
|---|---|---|---|
| H₂O₂ | 50% | 50% | 50% |
| Sodium stannate-3H | 0.60% | 0.60% | 0.60% |
| Sodium Salicylate | 0.15% | 0.15% | 0.15% |
| Dequest 2066 | 0.30% | 0.30% | 0.30% |
| Citric Acid | | 0.49% | |
| Methane Sulfonic acid | | | 0.58% |
| DI water | 48.95% | 48.95% | 48.95% |
| | | | |
| Citric Aicd | pH adjust | | |
| Sodium Hydroxide | PH adjust | | |
| DI Water | To 100% | To 100% | To 100% |
| | | | |
| Final pH | 9.0 | 9.0 | 9.0 |
| H₂O₂ loss at 85° C for 24 hours | 23.9% | 25.1% | 26.6% |

While preferred embodiments of the invention have been shown and described herein, it will be understood that such embodiments are provided by way of example only. Accordingly, it is intended that the appended claims cover all such variations as fall within the scope of the invention.

## Claims

1. A hydrogen peroxide composition comprising:
- hydrogen peroxide;
- a stabilizer system comprising 100 to 20,000 ppm of a colloidal stannate;
- an acidifying agent or a salt thereof selected from the group consisting of methane sulfonic acid or a salt thereof;
- phosphonic acid or a salt thereof; and
- salicylic acid or a salt thereof,
- wherein the composition does not comprise a phosphoric acid or a salt thereof,
- said hydrogen peroxide composition having a pH in the range of 0.1 to 6.

2. A composition according to claim 1, wherein the acidifying agent is present in an amount of about 0.5 to 20,000 ppm.

3. A composition according to any of claims 1 or 2, wherein the colloidal stannate is selected from the group consisting of sodium stannate, potassium stannate, zinc stannate, stannic oxide, and mixtures thereof.

4. Use of a composition according to any of claims 1 to 3, wherein the composition imparts at least one of physical stability and chemical stability in an alkaline hydrogen peroxide composition.

5. A composition according to any of claims 1 to wherein the hydrogen peroxide composition further comprises a free radical scavenger.

6. A composition according to any one of claims 1 to 3, or 5, wherein the organic phosphonic acid is an amino-phosphonic acid or the salt thereof is an amino-phosphonate.

7. A composition according to any of claims 5 or 6, wherein the free radical scavenger is an organic chelating agent selected from the group consisting of quinolines, pyridine-2-carboxylic acids, and mixtures and salts thereof.

8. Use, as a cleaning formulation, of a formulation comprising a composition as defined in any of claims 1 to 3, or 5 to 7 ; and a pH adjusting agent.

9. Use according to claim 8, wherein the formulation further comprising one or more additives selected from the group consisting of surfactants, bleaching agents, enzymes, fluorescent dyes, color dyes, fragrances, thickening agents, inorganic builders, anti-redeposition agents, opacifiers, and mixtures thereof.

10. Use according to claims 8 or 9, wherein the pH adjusting agent in the formulation is a base selected from the group consisting of alkali metal and alkaline earth metal hydroxides, ammonium hydroxide, substituted ammonium hydroxides, and mixtures thereof.

## Patentansprüche

1. Wasserstoffperoxidzusammensetzung, umfassend:
- Wasserstoffperoxid,
- ein Stabilisatorsystem, das 100 bis 20.000 ppm eines kolloidalen Stannats umfasst,
- ein Ansäuerungsmittel oder ein Salz davon aus der Gruppe bestehend aus Methansulfonsäure oder einem Salz davon,
- Phosphonsäure oder ein Salz davon und
- Salicylsäure oder ein Salz davon,
- wobei die Zusammensetzung keine Phosphorsäure und kein Salz davon umfasst,
- wobei die Wasserstoffperoxidzusammensetzung einen pH-Wert im Bereich von 0,1 bis 6 aufweist.

2. Zusammensetzung nach Anspruch 1, wobei das Ansäuerungsmittel in einer Menge von etwa 0,5 bis 20.000 ppm vorliegt.

3. Zusammensetzung nach Anspruch 1 oder 2, wobei das kolloidale Stannat aus der Gruppe bestehend aus Natriumstannat, Kaliumstannat, Zinkstannat, Zinn(IV)-oxid und Mischungen davon ausgewählt ist.

4. Verwendung einer Zusammensetzung nach einem der Ansprüche 1 bis 3, wobei die Zusammensetzung einer alkalischen Wasserstoffperoxidzusammensetzung physikalische Stabilität und/oder chemische Stabilität verleiht.

5. Zusammensetzung nach einem der Ansprüche 1 bis 3, wobei die Wasserstoffperoxidzusammensetzung ferner einen Radikalfänger umfasst.

6. Zusammensetzung nach einem der Ansprüche 1 bis 3 oder 5, wobei es sich bei der organischen Phosphonsäure um eine Aminophosphonsäure handelt oder es sich bei dem Salz davon um ein Aminophosphonat handelt.

7. Zusammensetzung nach Anspruch 5 oder 6, wobei es sich bei dem Radikalfänger um einen organischen Chelatbildner aus der Gruppe bestehend aus Chinolinen, Pyridin-2-carbonsäuren und Mischungen und Salzen davon handelt.

8. Verwendung einer Formulierung, die eine Zusammensetzung gemäß einem der Ansprüche 1 bis 3 oder 5 bis 7 und ein Mittel zur Einstellung des pH-Werts umfasst, als Reinigungsformulierung.

9. Verwendung nach Anspruch 8, wobei die Formulierung ferner ein oder mehrere Additive aus der Gruppe bestehend aus Tensiden, Bleichmitteln, Enzymen, fluoreszierenden Farbstoffen, farbgebenden Farbstoffen, Duftstoffen, Verdickungsmitteln, anorganischen Buildern, Vergrauungsinhibitoren, Trübungsmitteln und Mischungen davon umfasst.

10. Verwendung nach Anspruch 8 oder 9, wobei es sich bei dem Mittel zur Einstellung des pH-Werts in der Formulierung um eine Base aus der Gruppe bestehend aus Alkalimetall- und Erdalkalimetallhydroxiden, Ammoniumhydroxid, substituierten Ammoniumhydroxiden und Mischungen davon handelt.

## Revendications

1. Composition de peroxyde d'hydrogène comprenant :
- du peroxyde d'hydrogène ;
- un système de stabilisateur comprenant 100 à 20 000 ppm d'un stannate colloïdal ;
- un agent acidifiant ou un sel correspondant choisi dans le groupe constitué par l'acide méthanesulfonique ou un sel correspondant ;
- de l'acide phosphonique ou un sel correspondant ; et
- de l'acide salicylique ou un sel correspondant,
- la composition ne comprenant pas un acide phosphorique ou un sel correspondant,
- ladite composition de peroxyde d'hydrogène possédant un pH dans la plage de 0,1 à 6.

2. Composition selon la revendication 1, l'agent acidifiant étant présent en une quantité d'environ 0,5 à 20 000 ppm.

3. Composition selon l'une quelconque des revendications 1 et 2, le stannate colloïdal étant choisi dans le groupe constitué par le stannate de sodium, le stannate de potassium, le stannate de zinc, l'oxyde stannique, et des mélanges correspondants.

4. Utilisation d'une composition selon l'une quelconque des revendications 1 à 3, la composition conférant au moins l'une parmi une stabilité physique et une stabilité chimique dans une composition alcaline de peroxyde d'hydrogène.

5. Composition selon l'une quelconque des revendications 1 à 3, la composition de peroxyde d'hydrogène comprenant en outre un piégeur de radicaux libres.

6. Composition selon l'une quelconque des revendications 1 à 3, ou 5, l'acide phosphonique organique étant un acide amino-phosphonique ou le sel correspondant étant un amino-phosphonate.

7. Composition selon l'une quelconque des revendications 5 et 6, le piégeur de radicaux libres étant un agent chélatant organique choisi dans le groupe constitué par les quinoléines, les acides pyridine-2-carboxyliques, et des mélanges et des sels correspondants.

8. Utilisation, en tant qu'une formulation de nettoyage, d'une formulation comprenant une composition telle que définie selon l'une quelconque des revendications 1 à 3, ou 5 à 7 ; et un agent d'ajustement de pH.

9. Utilisation selon la revendication 8, la formulation comprenant en outre un ou plusieurs additifs choisis dans le groupe constitué par les tensioactifs, les agents de blanchiment, les enzymes, les colorants fluorescents, les colorants de couleur, les fragrances, les agents épaississants, les adjuvants inorganiques, les agents anti-redéposition, les agents opacifiants, et des mélanges correspondants.

10. Utilisation selon la revendication 8 ou 9, l'agent d'ajustement de pH dans la formulation étant une base choisie dans le groupe constitué par les hydroxydes de métal alcalin et de métal alcalinoterreux, l'hydroxyde d'ammonium, les hydroxydes d'ammonium substitués, et des mélanges correspondants.
